# EUROPÄISCHE PATENTSCHRIFT

(11) **EP 0 807 483 B1**
(45) Veröffentlichungstag und Bekanntmachung des Hinweises auf die Patenterteilung: **29.07.1998**
(21) Anmeldenummer: 97103819.5
(22) Anmeldetag: 07.03.1997
(51) Int. Cl.: B23D 51/02

(54) **Vorrichtung zum Ablängen von Hohlprofilen**
Device for cutting to length hollow structural members
Dispositif pour la coupe en longueur de profilés creux

(30) Priorität: 07.05.1996 DE 29608100 U
(43) Veröffentlichungstag der Anmeldung: 19.11.1997
(73) Patentinhaber: Schefe, Dietmar, D-88662 Überlingen (DE)
(72) Erfinder: Dix, Helmut, 88090 Immenstaad (DE)
(74) Vertreter: Engelhardt, Guido, Dipl.-Ing.

(56) Entgegenhaltungen:
- EP-A- 0 674 962
- DE-U- 9 217 392
- FR-A- 2 541 172
- US-A- 1 575 354

## Beschreibung

Die Erfindung bezieht sich auf eine Vorrichtung zum Ablängen von Hohlprofilen, insbesondere von Kanalprofilen aus Stahlblech für Brüstungskanäle, mittels einer vorzugsweise von Hand zu führenden Stichsäge oder eines ähnlichen Werkzeuges, mit einer einer Auflage zugeordneten Spanneinrichtung zur Halterung des Hohlprofils und einem Führungsglied, das in einer gemeinsamen Ebene verlaufende Führungsschlitze zur Aufnahme des Sägeblattes der Stichsäge aufweist.

Durch das DE-U1-9 217 392 ist eine derartige Ablängvorrichtung bekannt, die sich in der Praxis bewährt hat. Da bei dieser Ausgestaltung jedoch die Spanneinrichtung mit dem für das Sägeblatt der Stichsäge vorgesehenen Führungsglied fest verbunden ist, nimmt diese beim Einspannen unterschiedlich hoch bemessener Hohlprofile ebenfalls unterschiedliche Lagen ein, so daß bei einem Sägevorgang das Sägeblatt der Stichsäge mehr oder weniger weit aus der unteren Führungsschiene des Führungsgliedes herausragt. Die Vorrichtung muß daher stets in der Weise aufgebaut werden, daß für das Sägeblatt ein entsprechender Freiraum gegeben ist, oder es sind Sägeblätter unterschiedlicher Länge bereitzuhalten, die je nach Höhe des abzulängenden Hohlprofils in die Stichsäge einzusetzen sind. Beide Verfahrensweisen erfordern zusätzlichen Arbeitsaufwand. Des weiteren ist von Nachteil, daß Hohlprofile nur achssenkrecht abgelängt werden können, die feste Verbindung des Führungsgliedes mit der Spanneinrichtung schließt ein Verschwenken des Führungsgliedes, um z. B. einen Gehrungsschnitt vorzunehmen, aus.

Aufgabe der Erfindung ist es daher, eine Vorrichtung zum Ablängen von Hohlprofilen zu schaffen, mittels der es nicht nur möglich ist, Hohlprofile auch winkelig abzulängen, sondern es sollen vor allem alle einspannbaren Hohlprofile mit nur einer Sägeblattausführung abgesägt werden können und das Sägeblatt soll dabei stets gut geführt sein. Ein Unterbauen der Vorrichtung soll somit nicht mehr erforderlich sein, vielmehr soll diese stets unmittelbar auf einer Unterlage abgestellt werden können. Der dazu erforderliche Bauaufwand soll gering gehalten werden, dennoch soll stets ein exaktes und betriebssicheres Ablängen von Hohlprofilen unterschiedlicher Höhe zu bewerkstelligen sein.

Gemäß der Erfindung wird dies bei einer Vorrichtung zum Ablängen von Hohlprofilen der vorgenannten Gattung dadurch erreicht, daß das Führungsglied aus einem aus einzelnen Führungsschienen zusammengesetzten rechteckigen Tragrahmen für die Stichsäge besteht, in den eine vertikal verschiebbare und in unterschiedlichen Höhenlagen arretierbare mit einem Führungsschlitz für das Sägeblatt der Stichsäge versehene Halteleiste eingesetzt ist, und daß die obere horizontal verlaufende Führungsschiene des Tragrahmens zur Abstützung der Stichsäge ausgebildet und zumindest in die untere parallel zu dieser angeordnete Führungsschiene ein Führungsschlitz eingearbeitet ist.

Zweckmäßig ist es hierbei, den Tragrahmen um bis zu etwa 50° verschwenkbar an der Auflage zu lagern.

Dies kann in der Weise bewerkstelligt werden, in dem zur verschwenkbaren Lagerung des Tragrahmens die Auflage auf beiden Seiten jeweils mit einem plattenförmig ausgebildeten Ansatzstück versehen ist, an dem der Tragrahmen mittels in dessen untere Führungsschiene seitlich eingesetzter Bolzen gehalten ist, und daß zur Arretierung des Tragrahmens in unterschiedlichen Winkelstellungen an diesem auf einer oder beiden Seiten jeweils eine Spannschraube angebracht ist, die eine konzentrisch zu dem Bolzen in das Einsatzstück eingearbeitete Ausnehmung durchgreift. Zweckmäßig ist es hierbei auch, zur Arretierung des Tragrahmens in einer senkrecht zur Auflage ausgebildeten Endstellung an diesem, vorzugsweise an einer oder beiden vertikal verlaufenden Führungsschienen, jeweils einen Anschlag anzubringen, der mit dem zugeordneten Ansatzstück zusammenwirkt und an dem Tragrahmen einen Stellungsanzeiger vorzusehen, der mit einer auf einem der Ansatzstücke vorgesehenen Skallierung zusammenwirkt.

Die in den Tragrahmen eingesetzte Halteleiste sollte mittels zweier durch Spannschrauben mit dieser verbundene Spannstücke mit den beiden vertikal verlaufenden Führungsschienen des Tragrahmens verspannbar sein, die mittels in Richtung der vertikalen Führungsschienen abstehender Ansätze mit den Führungsschienen verspannbar sein und zur Verdrehsicherung jeweils mit einem die Halteleiste übergreifenden Ansatzstück aufweisen sollte.

Die Spanneinrichtung kann in einfacher Ausgestaltung durch eine über der Auflage angebrachte vorzugsweise parallel zu dem Tragrahmen seitlich verschiebbar in einem Traggestell angeordnete Druckplatte gebildet werden, die mittels einer in dem Traggestell abgestützten Gewindespindel vertikal verstellbar ist, wobei die Gewindespindel in einer mit einer Gewindebohrung versehenen Platte abgestützt sein sollte, die verschiebbar an dem Traggesell angebracht ist.

Des weiteren ist es angezeigt, die obere Führungsschiene des Tragrahmens mit einer Führungsnut oder einer Führungsleiste zur verschiebbaren Halterung der Stichsäge zu versehen.

Wird eine Vorrichtung zum Ablängen von Hohlprofilen gemäß der Erfindung ausgebildet, so ist es nicht nur auf einfache Weise möglich, Hohlprofile achssenkrecht und unter einem einstellbaren Winkel schräg abzulängen, sondern es können vor allem auch Hohlprofile unterschiedlicher Höhe abgesägt werden, ohne daß dazu die Vorrichtung zu unterbauen ist oder unterschiedliche lang bemessene Sägeblätter notwendig sind. Dadurch, daß die Stichsäge bei einem Sägevorgang auf den dafür vorgesehenen das Führungsglied bildenden Tragrahmen aufgesetzt wird, können stets Sägeblätter gleicher Länge verwendet werden, die nur geringfügig aus der unteren Führungsschiene herausragen. Da aber in dem Tragrahmen eine zusätzliche Halteleiste höhenverschiebbar eingesetzt ist, die ebenfalls einen Führungsschlitz für das Sägeblatt aufweist und auf dem zu bearbeitenden Hohlprofil aufliegt, ist das Sägeblatt aber stets unmittelbar über und unter dem Hohlprofil geführt und dieses ist zwischen der unteren Führungsschiene des Tragrahmens und der in diesen eingesetzten Halteleiste eingespannt, eine sichere Halterung des Hohlprofils und eine optimale Führung des Sägeblattes der Stichsäge sind somit gegeben. Ein Verlaufen eines Sägeschnittes ist dadurch nahezu ausgeschlossen, so daß bei einfacher Handhabung stets eine äußerst zufriedenstellende Funktionsweise der vorschlagsgemäß ausgebildeten Sägevorrichtung gegeben ist.

In der Zeichnung ist ein Ausführungsbeispiel der gemäß der Erfindung ausgebildeten Vorrichtung zum Ablängen von Hohlprofilen dargestellt, das nachfolgend im einzelnen erläutert ist. Hierbei zeigt:
- Figur 1: die Vorrichtung in Vorderansicht,
- Figur 2: die Vorrichtung nach Figur 1 ohne eingespanntes Hohlprofil, in Seitenansicht,
- Figur 3: die Vorrichtung nach Figur 2, in Draufsicht,
- Figur 4: die Vorrichtung nach Figur 2, in Vorderansicht während der Herausnahme oder beim Einsetzen der Halteleiste,
- Figur 5: Die Vorrichtung nach Figur 2 mit schräggestelltem Führungsglied,
- Figur 6: die Vorrichtung nach Figur 2 mit auf dem Führungsglied aufgesetzter Stichsäge,
- Figur 7: einen Schnitt nach der Linie VII - VII der Figur 2, in einer vergrößerten Darstellung, und
- Figur 8: einen Ausschnitt nach der Linie VIII - VIII der Figur 1, in vergrößerter Darstellung.

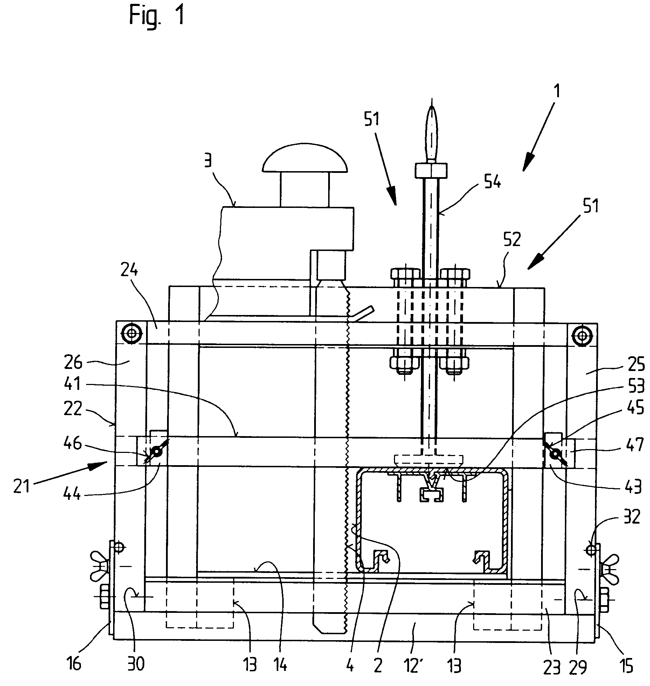

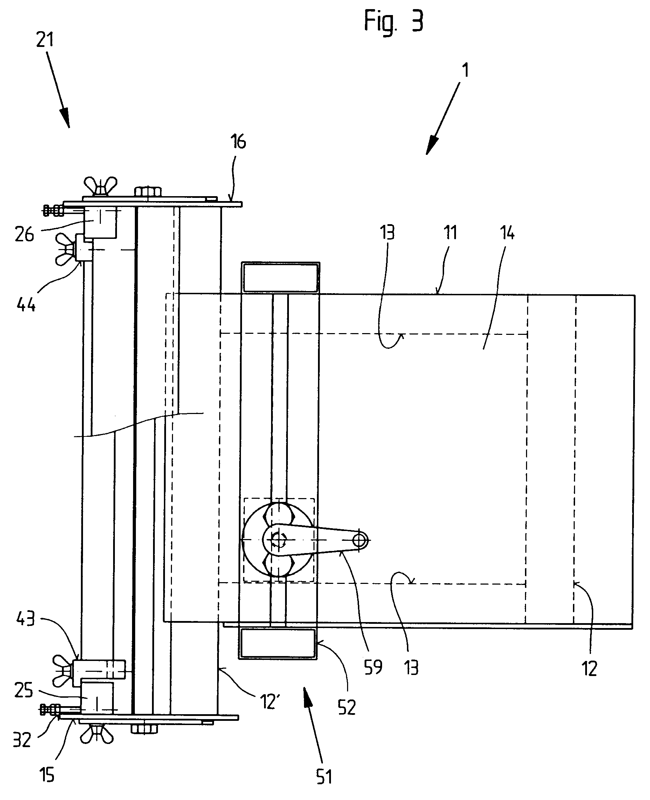

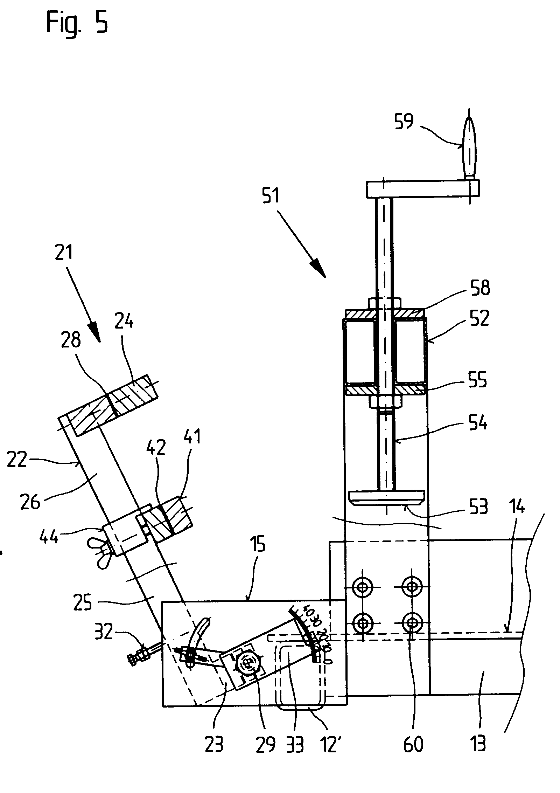

Die in den Figuren 1 bis 6 dargestellte und jeweils mit 1 bezeichnete Vorrichtung dient zum maßgenauen Ablängen eines Hohlprofils 2 mittels eines von Hand zu betätigenden Werkzeuges, z. B. einer Stichsäge 3, und besteht im wesentlichen aus einer Auflage 11 für das Hohlprofil 2, einem Führungsglied 21 für die Stichsäge 3 und ein in diese eingesetztes Sägeblatt 4 sowie einer Spanneinrichtung 51, mittels der das Hohlprofil 2 zur Durchführung eines Sägevorganges auf der Auflage 11 aufspannbar ist. Da das Sägeblatt 4 der Stichsäge 3 durch das Führungsglied 21 im unmittelbaren Bereich des Hohlprofils 2 geführt ist, ist ein Verlaufen ausgeschlossen, so daß ein exaktes Ablängen des Hohlprofils 2 gewährleistet ist.

Die Auflage 11 ist hierbei aus rechtwinklig zueinander angeordneten Holmen 12, 12' und 13 und einem auf diese aufgesetzten Auflageblech 14, das rechtwinklig ausgebildet ist, zusammengesetzt, so daß auch eine seitliche Anlage für das Hohlprofil 2 gegeben ist. An der Auflage 11 sind das Führungsglied 21 sowie die Spanneinrichtung 51 angebracht.

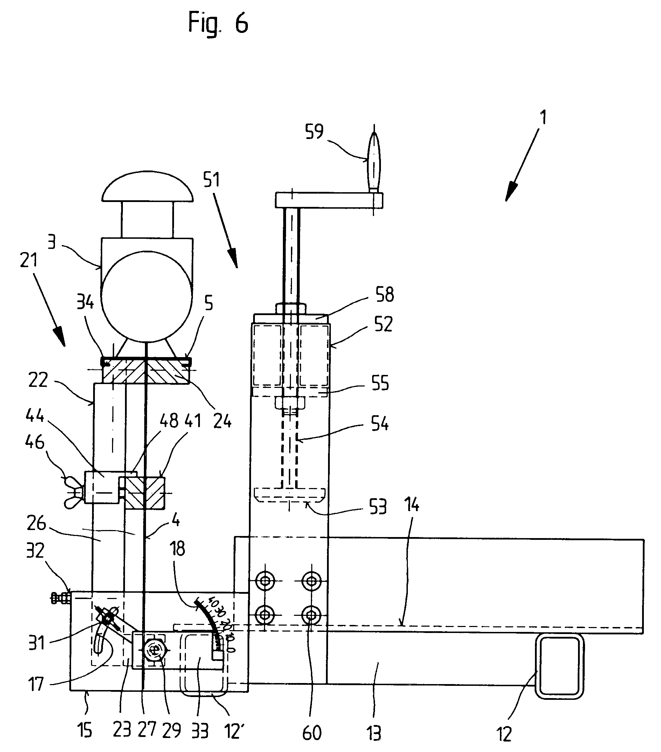

Das Führungsglied 21 besteht aus einem rechtwinkligen Tragrahmen 22, der durch horizontal verlaufende Führungsschienen 23 und 24 sowie durch vertikal angeordnete Führungsschienen 25 und 26 gebildet ist. Die horizontal verlaufenden Führungsschienen 23 und 24 sind hierbei jeweils mit einem Führungsschlitz 27 bzw. 28 zur Aufnahme des Sägeblattes 4 der Stichsäge 3 versehen. Außerdem kann, wie dies der Figur 6 zu entnehmen ist, in die Führungsschiene 24 eine Führungsnut 34 eingearbeitet sein, in der die Stichsäge 3 mittels einer an dieser angebrachten Führungsleiste 5 bei einem Sägevorgang geführt ist.

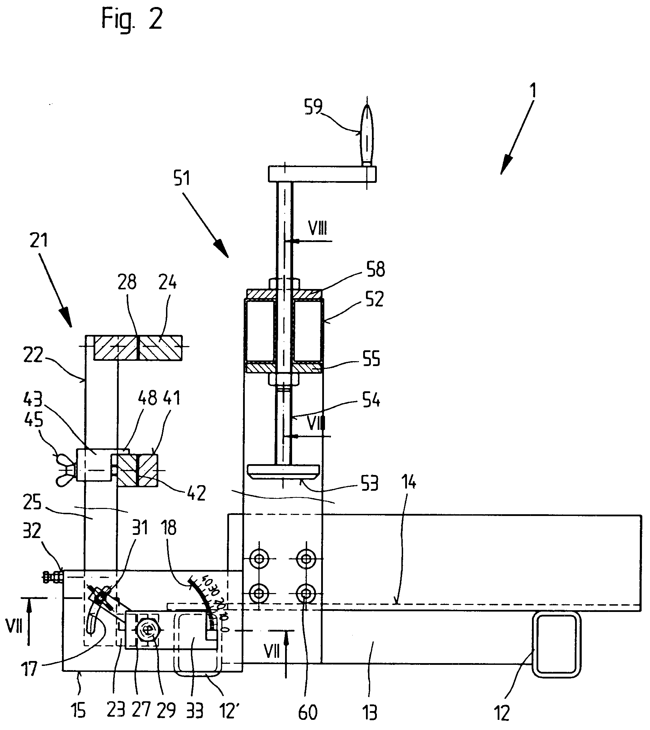

Der Tragrahmen 22 ist, um Hohlprofile auch unter einem einstellbaren Winkel ablängen zu können, verschwenkbar gelagert. Dazu sind an dem Holm 12' der Auflage 11 seitlich Ansatzstücke 15 und 16 angeschweißt und in die Führungsschiene 23 sind Bolzen 29 und 30 eingesetzt, die in den Ansatzstücken 15 und 16 verdrehbar gelagert sind. Der Tragrahmen 22 kann somit um die Achsen der Bolzen 29 und 30 verschwenkt und in unterschiedlichen Winkelstellungen mittels Spannschrauben 31, die in die Führungsschienen 25 und/oder 26 eingeschraubt sind und in die Ansatzstücke 15 und/oder 16 eingearbeitete bogenförmig gekrümmt ausgebildete Ausnehmungen 17 durchgreifen, arretiert werden. Mittels einer an dem Ansatzstück 15 vorgesehenen Skalierung 18 und einem mit dem Tragrahmen 22 fest verbundenen Stellungsanzeiger 23 ist der jeweils vorzunehmende Schnittwinkel leicht einstellbar. Ein achssenkrechter Schnitt wird dagegen mit Hilfe eines Anschlages 32 eingestellt, der ein-oder beidseitig an dem Tragrahmen 22 angebracht ist und, wie dies insbesondere der Figur 2 zu entnehmen ist, mit den Ansatzstücken 15 und/oder 16 zusammenwirkt.

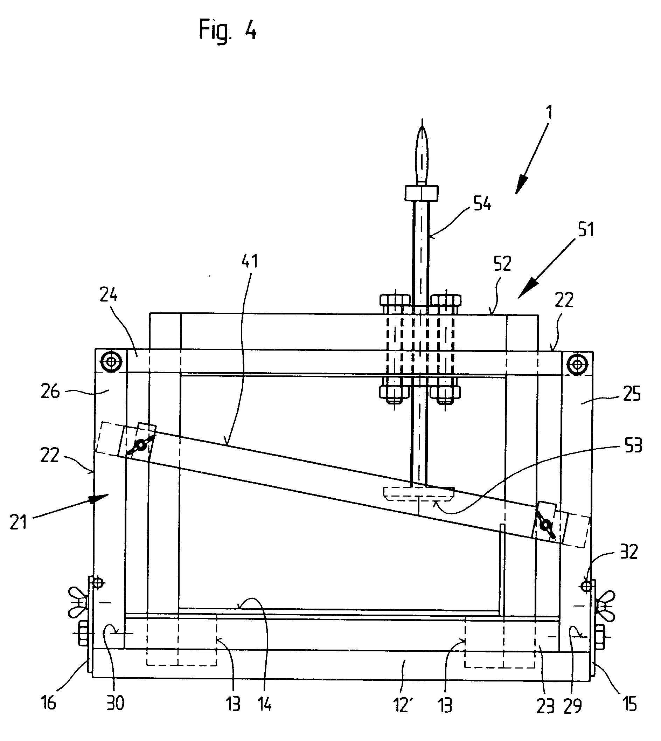

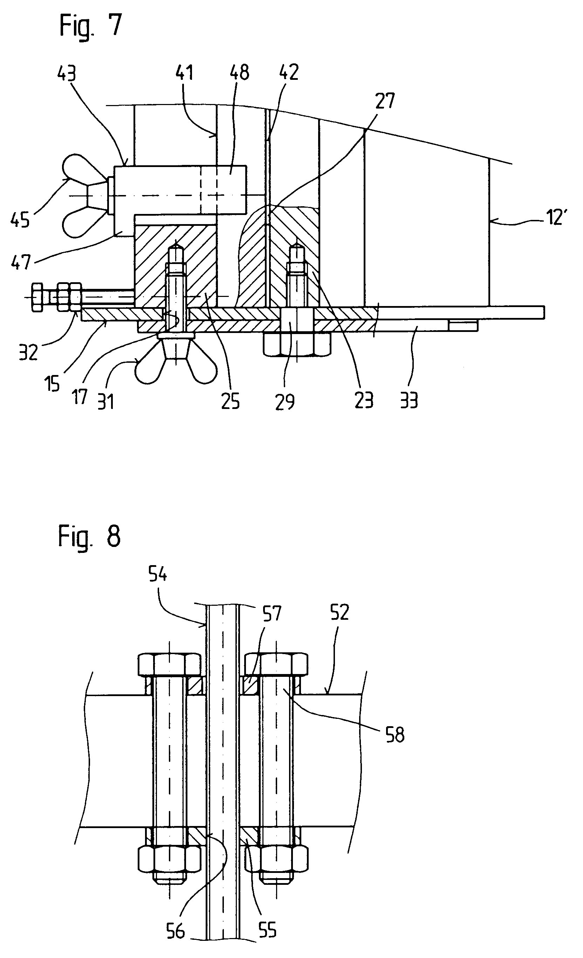

Um das Sägeblatt 4 bei einem Sägevorgang auch unmittelbar in dem Bereich über dem Holprofil 3 führen zu können, ist in den Tragrahmen 22 eine Halteleiste 41 höhenverstellbar eingesetzt, die ebenfalls einen Führungsschlitz 42 aufweist. Mittels Spannstücken 43 und 44, die von in die Halteleiste 41 eingesetzter Spannschrauben 45 bzw. 46 durchgriffen sind, ist die Halteleiste 41 mit den Führungsschienen 24 und 26 verspannbar. Dazu sind an den Spannstücken 43 und 44, wie dies in Figur 7 dargestellt ist, jeweils nach außen abstehende kurze Ansatzstücke 47 angebracht, die die Führungsschienen 25 und 26 geringfügig übergreifen, so daß die Halteleiste 41 durch Schrägstellen, wie dies in Figur 4 gezeigt ist, gegebenenfalls aus dem Tragrahmen 22 herausgenommen werden kann. Und um beim Lösen der Spannstücke 43, 44 ein Verdrehen auszuschließen, sind an diesen des weiteren auf der Halteleiste 41 aufliegende Ansätze 48 vorgesehen.

Die Spanneinrichtung 51 besteht aus einer auf das Hohlprofil 3 einwirkenden Druckplatte 53 und einer in einem Traggestell 52, das mittels Schrauben 60 an der Auflage 11 befestigt ist, verdrehbar gelagerten und mit einer Handkurbel 59 versehenen Gewindespindel 54. Dazu dient eine mit einer Gewindebohrung 56 versehene auf der unteren Seite des Tragrahmens 52 angeordneten Platte 55, die, wie dies inbesondere der Figur 8 zu entnehmen ist, mittels Schrauben 58, die sich an einer weiteren auf der oberen Seite des Traggestells 52 angeordneten Platte 57 abstützen, gehalten ist. Die Gewindespindel 54 und die an dieser angebrachte Druckplatte 53 können somit auch parallel zum dem Tragrahmen 22, um ein Hohlprofil jeweils mittig durch Verdrehen der Handkurbel 59 einzuspannen, in dem Traggestell 52 verschoben werden.

## Patentansprüche

1. Vorrichtung (1) zum Ablängen von Hohlprofilen (2), insbesondere von Kanalprofilen aus Stahlblech für Brüstungskanäle, mittels einer vorzugsweise von Hand zu führenden Stichsäge (3) oder eines ähnlichen Werkzeuges, mit einer einer Auflage (11) zugeordneten Spanneinrichtung (51) zur Halterung des Hohlprofils (2) und einem Führungsglied (21), das in einer gemeinsamen Ebene verlaufende Führungsschlitze (27, 28) zur Aufnahme des Sägeblattes (4) der Stichsäge (3) aufweist,
**dadurch gekennzeichnet,**
daß das Führungsglied (21) aus einem aus einzelnen Führungsschienen (23, 24, 25, 26) zusammengesetzten rechteckigen Tragrahmen (22) für die Stichsäge (3) besteht, in den eine vertikal verschiebbare und in unterschiedlichen Höhenlagen arretierbare mit einem Führungsschlitz (42) für das Sägeblatt (4) der Stichsäge (3) versehene Halteleiste (41) eingesetzt ist, und daß die obere horizontal verlaufende Führungsschiene (24) des Tragrahmens (22) zur Abstützung der Stichsäge (3) ausgebildet und zumindest in die untere parallel zu dieser angeordnete Führungsschiene (23) ein Führungsschlitz (28) eingearbeitet ist.

2. Vorrichtung nach Anspruch 1,
**dadurch gekennzeichnet,**
daß der Tragrahmen (22) um bis zu etwa 50° verschwenkbar an der Auflage (11) gelagert ist.

3. Vorrichtung nach Anspruch 2,
**dadurch gekennzeichnet,**
daß zur verschwenkbaren Lagerung des Tragrahmens (22) die Auflage (11) auf beiden Seiten jeweils mit einem plattenförmig ausgebildeten Ansatzstück (15, 16) versehen ist, an dem der Tragrahmen (22) mittels in dessen untere Führungsschiene (23) seitlich eingesetzter Bolzen (29, 30) gehalten ist.

4. Vorrichtung nach Anspruch 2 oder 3,
**dadurch gekennzeichnet,**
daß zur Arretierung des Tragrahmens (22) in unterschiedlichen Winkelstellungen an diesem auf einer oder beiden Seiten jeweils eine Spannschraube (31) angebracht ist, die eine konzentrisch zu dem Bolzen (29, 30) in das Ansatzstück (15, 16) eingearbeitete Ausnehmung (17) durchgreift.

5. Vorrichtung nach einem oder mehreren der Ansprüche 2 bis 4,
**dadurch gekennzeichnet,**
daß zur Arretierung des Tragrahmens (22) in einer senkrecht zur Auflage (11) ausgebildeten Endstellung an diesem vorzugsweise an einer oder beiden vertikal verlaufenden Führungsschienen (25, 26) jeweils ein Anschlag (32) angebracht ist, der mit dem zugeordneten Ansatzstück (15, 16) zusammenwirkt.

6. Vorrichtung nach einem oder mehreren der Ansprüche 2 bis 5,
**dadurch gekennzeichnet,**
daß an dem Tragrahmen (22) ein Stellungsanzeiger (33) angebracht ist, der mit einer auf einem der Ansatzstücke (15) vorgesehenen Skallierung (18) zusammenwirkt.

7. Vorrichtung nach Anspruch 1,
**dadurch gekennzeichnet,**
daß die in den Tragrahmen (22) eingesetzte Halteleiste (41) mittels zweier durch Spannschrauben (45, 46) mit dieser verbundener Spannstücke (43, 44) mit den beiden vertikal verlaufenden Führungsschienen (25, 26) des Tragrahmens (22) verspannbar ist.

8. Vorrichtung nach Anspruch 7,
**dadurch gekennzeichnet,**
daß die Spannstücke (43, 44) mittels in Richtung der vertikalen Führungsschienen (25, 26) abstehender Ansätze (47) mit diesen verspannbar sind.

9. Vorrichtung nach Anspruch 7 oder 8,
**dadurch gekennzeichnet,**
daß zur Verdrehsicherung der Spannstücke (43, 44) an diesen jeweils ein die Halteleiste (41) übergreifendes Ansatzstück (48) angebracht ist.

10. Vorrichtung nach Anspruch 1,
**dadurch gekennzeichnet,**
daß die Spanneinrichtung (51) durch eine über der Auflage (11) angebrachte vorzugsweise parallel zu dem Tragrahmen (22) seitlich verschiebbar in einem Traggestell (52) angeordnete Druckplatte (53) gebildet ist, die mittels einer in dem Traggestell (52) abgestützten Gewindespindel (54) vertikal verstellbar ist.

11. Vorrichtung nach Anspruch 10,
**dadurch gekennzeichnet,**
daß die Gewindespindel (54) in einer mit einer Gewindebohrung (56) versehenen Platte (57) abgestützt ist, die verschiebbar an dem Traggestell (52) angebracht ist.

12. Vorrichtung nach einem oder mehreren der Ansprüche 1 bis 11,
**dadurch gekennzeichnet,**
daß die obere Führungsschiene (24) des Tragrahmens (22) mit einer Führungsnut (34) oder einer Führungsleiste zur verschiebbaren Halterung der Stichsäge (3) versehen ist.

## Claims

1. A device (1) for cutting to length hollow structural members (2), in particular duct structural members from sheet steel for sill-type trunking, by means of a jigsaw (3) or a similar tool which, in a preferred embodiment, is guided by hand, having a clamping device (51) facing a base (11) for the purpose of holding the hollow structural member (2) and with a guide element (21) having guide slots (27, 28) running in a common horizontal plane in order to accommodate the saw blade (4) of the jigsaw (3),
**characterised in that,**
the guide element (21) consists of a rectangular carrier frame (22) for the jigsaw (3) and is assembled from individual guide rails (23, 24, 25, 26) with, inserted into it, a vertically movable retaining bar (41) which can be locked at different height levels and possesses a guide slot (42) for the saw blade (4) of the jigsaw (3), and that the top, horizontal guide rail (24) of the carrier frame (22) is formed so as to support the jigsaw (3) and a guide slot (28) is worked into at least the bottom guide rail (23) which runs parallel to the top guide rail (24).

2. The device in accordance with Claim 1,
**characterised in that,**
the carrier frame (22) is mounted on the base (11) with a swivelling arc of about 50°.

3. The device in accordance with Claim 2,
**characterised in that,**
in order to mount the carrier frame (22) in such a way that it can swivel, the base (11) is equipped with a plate-shaped attachment piece (15, 16) on each side against which the carrier frame (22) is held by means of pins (29, 30) inserted at the sides into the bottom guide rail (23) of the carrier frame.

4. The device in accordance with Claim 2 or 3,
**characterised in that,**
in order to lock the carrier frame (22) at different angle positions, a clamping screw (31) is attached to one or both sides of the carrier frame (22), the aforementioned clamping screw (31) engaging in a recess (17) worked into the attachment piece (15, 16) concentrically with the pin (29, 30).

5. The device in accordance with one or more of Claims 2 to 4,
**characterised in that,**
in order to lock the carrier frame (22) in a limit position formed perpendicular to the base (11), there is a stop (32) attached to one or, in a preferred embodiment, both vertical guide rails (25, 26) of the carrier frame (22) and acting in conjunction with the corresponding attachment piece (15, 16).

6. The device in accordance with one or more of Claims 2 to 5,
**characterised in that,**
there is a position indicator (33) attached to the carrier frame (22) which acts in conjunction with a scale (18) provided on one of the attachment pieces (15).

7. The device in accordance with Claim 1,
**characterised in that,**
the retaining bar (41) inserted into the carrier frame (22) can be clamped onto both the vertical guide rails (25, 26) of the carrier frame (22) by means of two clamping pieces (43, 44) connected to the retaining bar (41) by clamping screws (45, 46).

8. The device in accordance with Claim 7,
**characterised in that,**
the clamping pieces (43, 44) can be clamped against the guide rails by means of attachments (47) projecting in the direction of the vertical guide rails (25, 26).

9. The device in accordance with Claim 7 or 8,
**characterised in that,**
an attachment piece (48) which projects beyond the retaining bar (41) is fitted onto each of the clamping pieces (43, 44) in order to prevent the clamping pieces (43, 44) from twisting.

10. The device in accordance with Claim 1,
**characterised in that,**
the clamping device (51) is formed by a pressure plate (53) fitted above the base (11) and arranged in a carrier structure (52) so the pressure plate (53) is, in a preferred embodiment, parallel to the carrier frame (22) and can be moved from side-to-side, whilst it can be moved vertically by means of a threaded spindle (54) supported in the carrier structure (52).

11. The device in accordance with Claim 10,
**characterised in that,**
the threaded spindle (54) is supported in a plate (57) equipped with a tapped hole (56), with the plate (57) being attached to the carrier structure (52) in a movable arrangement.

12. The device in accordance with one or more of Claims 1 to 11,
**characterised in that,**
the top guide rail (24) of the carrier frame (22) is provided with a guide groove (34) or a guide rail for holding the jigsaw (3) in a movable arrangement.

## Revendications

1. Dispositif (1) pour la coupe en longueur de profilés creux (2), notamment de profilés à canaux en tôle d'acier pour canaux d'appuis, moyennant de préférence une scie sauteuse actionnée manuellement (3) ou un outil similaire, avec un équipement de serrage (51) assigné à une portée (11) pour le maintien du profilé creux (2), et un élément de guidage (21) contenant des fentes de guidage (27, 28) orientées dans un plan commun qui servent au logement de la lame (4) de la scie sauteuse (3),
caractérisé en ce que
l'élément de guidage (21) consiste d'un cadre de support (22) rectangulaire composé de glissières de guidage individuelles (23, 24, 25, 26) pour la scie sauteuse (3), dans lequel est inséré une réglette de support (41) qui se laisse régler en verticale, qui se laisse bloquer en diverses hauteurs et qui contient une fente de guidage (42) pour la lame (4) de la scie sauteuse (3), et que la glissière de guidage supérieure horizontale (24) du cadre de support (22) est conçue pour appuyer la scie sauteuse (3) et que, au moins dans la glissière de guidage inférieure (23) disposée parallèlement à celle-ci, il est pratiqué une fente de guidage (28).

2. Dispositif d'après la revendication 1,
caractérisé en ce que
le cadre de support (22) est fixé avec un angle de pivotement de jusqu'à 50° sur la portée (11).

3. Dispositif d'après la revendication 2,
caractérisé en ce que
pour le pivotement du cadre de support (22), la portée (11) est munie de part et d'autre d'un embout sous la forme de plaques (15, 16), sur lequel est retenu le cadre de support (22) au moyen de boulons (29, 30) insérés latéralement dans sa glissière de guidage inférieure (23).

4. Dispositif d'après la revendication 2 ou 3,
caractérisé en ce que
pour le blocage du cadre de support (22) aux divers angles, il est prévu sur un ou sur les deux côtés de celui-ci respectivement une vis de serrage (31) traversant par un évidement (17) pratiqué concentriquement par rapport aux boulons (29, 30) dans les embouts (15, 16).

5. Dispositif d'après une ou plusieurs des revendications 2 à 4,
caractérisé en ce que,
pour le blocage du cadre de support (22) dans une position finale perpendiculaire à la portée (11), il est prévu sur celui-ci, de préférence sur une ou sur les deux glissières de guidage verticales (25, 26), respectivement une butée (32) collaborant avec l'embout (15, 16) correspondant.

6. Dispositif d'après une ou plusieurs des revendications 2 à 5,
caractérisé en ce que,
sur le cadre de support (22), il est monté un indicateur de position (33) collaborant avec une échelle (18) prévue sur un des embouts (15, 16).

7. Dispositif d'après la revendication 1,
caractérisé en ce que,
au moyen de deux éléments de serrage (43, 44) fixés par des vis de serrage (45, 46) sur celle-ci, la réglette de support (41) insérée dans le cadre de support (22) se laisse serrer sur les deux glissières de guidage verticales (25, 26) du cadre de support (22).

8. Dispositif d'après la revendication 7,
caractérisé en ce que,
au moyen d'embouts (47) saillant en direction des glissières de guidage verticales (25, 26), les éléments de serrage (43, 44) se laissent serrer sur celles-ci.

9. Dispositif d'après la revendication 7 ou 8,
caractérisé en ce que,
pour éviter une rotation des éléments de serrage (43, 44), il est prévu sur ceux-ci respectivement un embout (48) s'engrenant dans la réglette de support (41).

10. Dispositif d'après la revendication 1,
caractérisé en ce que
l'équipement de serrage (51) est formé par une plaque de pression (53) disposée au-dessus de la portée (11) qui se laisse déplacer latéralement et de préférence parallèlement par rapport au cadre de support (22) dans un châssis de support (52) et qui peut être réglée verticalement au moyen d'une broche filetée (54) s'appuyant dans le châssis de support (52).

11. Dispositif d'après la revendication 10,
caractérisé en ce que
la broche filetée (54) s'appuie dans une plaque (57) munie d'un trou taraudé (56) qui se laisse déplacer sur le châssis de support (52).

12. Dispositif d'après une ou plusieurs des revendications 1 à 11,
caractérisé en ce que
la glissière de guidage supérieure (24) du cadre de support (22) est munie d'une rainure de guidage (34) ou d'une réglette de guidage pour la fixation réglable de la scie sauteuse (3).
